# EUROPÄISCHE PATENTSCHRIFT

(11) **EP 4 420 295 B1**
(45) Veröffentlichungstag und Bekanntmachung des Hinweises auf die Patenterteilung: **28.10.2026**
(21) Anmeldenummer: 23748970.3
(22) Anmeldetag: 25.07.2023
(51) Int. Cl.: H04L 9/08

(54) **VERFAHREN ZUR VERSCHLÜSSELTEN ÜBERMITTLUNG VON DATEN**
METHOD FOR THE ENCRYPTED TRANSMISSION OF DATA
PROCÉDÉ DE TRANSMISSION CHIFFRÉE DE DONNÉES

(30) Priorität: 16.08.2022 DE 102022002973
(43) Veröffentlichungstag der Anmeldung: 28.08.2024
(73) Patentinhaber: Mercedes-Benz Group AG, 70372 Stuttgart (DE)
(72) Erfinder: ZOU, Peiguo, 70565 Stuttgart (DE)
(74) Vertreter: Novagraaf Group
(86) Internationale Anmeldenummer: PCT/EP2023/070493
(87) Internationale Veröffentlichungsnummer: WO 2024/037836

(56) Entgegenhaltungen:
- US-A1- 2009 024 845
- P MENEZES ET AL: "This is a Chapter from the Handbook of Applied Cryptography, by A Key Establishment Protocols", 31 December 1997 (1997-12-31), XP055119322, Retrieved from the Internet <URL:http://cacr.uwaterloo.ca/hac/about/chap12.pdf> [retrieved on 20140521]
- ALFRED J MENEZES ET AL: "Handbook of Applied Cryptography- chapter 13 - Key Management Techniques", HANDBOOK OF APPLIED CRYPTOGRAPHY, 16 October 1996 (1996-10-16), Baton Rouge, XP055467436, ISBN: 978-0-429-46633-5, Retrieved from the Internet <URL:http://cacr.uwaterloo.ca/hac/about/chap13.pdf> [retrieved on 20180416]

## Beschreibung

Die Erfindung betrifft ein Verfahren zur verschlüsselten Übermittlung von Daten gemäß dem Oberbegriff von Anspruch 1.

Immer mehr vertrauliche und personenbezogene Daten werden zwischen zweier oder mehreren Parteien einschließlich technischer Systeme und deren Subsysteme über IPbasierte Kommunikation hin und her gesendet und müssen dabei vor Abhören und Manipulation durch unbefugte Dritte einschließlich Hackangriffe geschützt werden. Insbesondere in Embedded Systemen müssen hochsensitive Daten bereits während der Speicherung und während der Übertragung beispielweise über (engl.) "Scalable Service-Oriented Middleware over IP" SOME/IP vor nicht autorisierten Zugriffen ohne massive CPU-Belastungen geschützt werden.

Eine Schwachstelle, die beispielweise einen einfachen Zugriff auf geheime Schlüssel zur Ver- und Entschlüsselung von Daten erlaubt, kann die Sicherheit des gesamten Systems gefährden. Werden Informationen über ein öffentliches Netzwerk ausgetauscht, so durchlaufen sie mehrere Vermittlungsknoten, deren Zuverlässigkeit fragwürdig sein kann. Dementsprechend müssen die Daten vor oder während der Übertragung vom Sender vollständig verschlüsselt und nach Erhalt vom Empfänger entschlüsselt werden. Dabei müssen diese Parteien beziehungsweise Endpunkte einen Schlüssel immer geschützt und temporär ausgetauscht haben, der ihnen erlaubt, die jeweilige Nachricht des anderen kryptographisch zu entschlüsseln, der aber auch vor nicht autorisierten Zugriffen geschützt werden muss, wenn die verschlüsselten Daten durch unbefugte Dritte über andere Sicherheitslücken, welche beispielweise in der Cloud abgegriffen werden.

Aus der DE°10°355°865°B4 ist bereits ein Verfahren sowie ein Chip zur kryptographischen Verschlüsselung von Daten offenbart. Das Verfahren ermöglicht hierbei ein kryptographisches Verschlüsseln und Entschlüsseln von Daten mit einem symmetrischen Chiffrieralgorithmus nach dem Stromprinzip. Ebenso wird bei diesem Beispiel zum Stand der Technik ein neues kryptographisches Verfahren zugrunde gelegt, welches in einem neuen Chip realisiert/implementiert ist. Der sogenannte BAPA-Chip zur Umsetzung des Verfahrens in Hardware ist ein neuer Kryptographie-Chip, der den gesamten Bereich der elektronischen Datenkommunikation unterstützt. Nachteilig ist jedoch die Hardware-abhängige Verschlüsselung und Verarbeitung durch diesen oder anderen Chips, der nicht in jedes Embedded System integrierbar ist, insbesondere, wenn ein bestehendes Embedded System keine Änderungen mehr an der Hardware und deren Architektur zulässt.

Ebenso ist aus der US°2018°0°063°094°A1 bereits ein (engl.) "end-to-end encryption for personal communication nodes" offenbart, entsprechend ist dies eine Ende-zu-Ende-Verschlüsselung von Gruppenkommunikationen für persönliche Kommunikationsknoten. Diese wird durch Implementierung eines paarweisen Verschlüsselungsprozesses zwischen einem Paar von Endbenutzergeräten bereitgestellt, welche Mitglieder einer Kommunikationsgruppe sind. Hierbei teilt ein Endbenutzergerät einen Gruppenschlüssel mit dem gepaarten Endbenutzergerät. Der Gruppenschlüssel ist wiederum durch Verwendung eines Nachrichtenschlüssels, der unter Verwendung des paarweisen Verschlüsselungsprozesses erstellt wurde, verschlüsselt. Wenn ein übertragendes Mitglied der Gruppe mit Mitgliedern kommuniziert, erzeugt es einen Stream-Schlüssel und verschlüsselt Stream-Daten mit dem Stream-Schlüssel, verschlüsselt den Stream-Schlüssel mit dem Gruppenschlüssel und überträgt dann den verschlüsselten Stream-Schlüssel und verschlüsselte Stream-Daten an Gruppenmitglieder. Nachteilig daran ist vor allem, dass eine Kommunikationsgruppe vorher in einem Server mit deren Identitäts- und öffentlichen Schlüsseln registriert werden muss. Zur Verschlüsselungskommunikation muss eine sichere Verbindung zwischen einem Paar von Endbenutzergeräten vorher aktiv hergestellt werden. Der Nachrichtenschlüssel wird nicht verschlüsselt und kann dementsprechend von unbefugten Dritten einschließlich Hacker abgegriffen werden.

Zudem offenbart die CA 2 703 612 A1 für die sichere Kommunikation in einer Einzelhandelsumgebung eine sichere logische Kommunikationsverbindung zwischen einem sicheren Zahlungsmodul und einem Controller, die durch kryptographische Authentifizierung von Geräten erzeugt wird, welche sensible Informationen in der Einzelhandelsumgebung verarbeiten.

Aufgabe der Erfindung ist hierbei, ein Verfahren zur verschlüsselten Übermittlung von Daten derart weiterzuentwickeln, dass eine die Daten besonders stark geschützt werden.

Diese Aufgabe wird erfindungsgemäß mittels eines Verfahrens mit den Merkmalen des Anspruchs 1 gelöst. Vorteilhafte Ausgestaltungen mit günstigen Weiterbildungen der Erfindung sind Gegenstand der abhängigen Ansprüche.

Ein Aspekt der Erfindung betrifft ein Verfahren zur verschlüsselten Übermittlung von Daten zwischen einem die Daten übermittelnden ersten Endgerät und wenigstens einem die Daten empfangenden zweiten Endgerät über ein Netzwerk. Netzwerk und Endgeräte weisen hierbei alle für Übermittlung von Daten notwendige Komponenten auf, wodurch die Kommunikation zwischen den Endgeräten und einem Backend des Netzwerkes ermöglicht wird. Das Verfahren umfasst die mehrere Verfahrensschritte, wobei in einem ersten Verfahrensschritt eine Generierung eines ersten privaten digitalen Schlüssels und eines öffentlichen zweiten digitalen Schlüssels sowie eines Root-Zertifikats durchgeführt wird. Die beiden Schlüssel sind hierbei korrespondierend zueinander generiert und mit dem Root-Zertifikat zertifiziert. Ein Root-Zertifikat, oder auch Wurzelzertifikat, ist ein Zertifikat, das von der Zertifizierungsstelle selbst unterschrieben wurde. Es dient dazu, die Gültigkeit aller Zertifikate, in diesem Fall Schlüssel, zu validieren, die von der Zertifizierungsstelle ausgestellt wurden. Insbesondere wird die Generierung hierbei im Backend des Netzwerkes durchgeführt. In weiteren Verfahrensschritten wird zunächst eine geschützte Speicherung des privaten ersten digitalen Schlüssels im Backend des Netzwerkes und eine Generierung und Speicherung einer jeweiligen Schlüsselkopie des öffentlichen zweiten digitalen Schlüssels für die jeweiligen Endgeräte durchgeführt. Daraufhin werden direkt zwei identische öffentliche zweite digitale Schlüssel generiert und an die jeweiligen Endgeräte übermittelt beziehungsweise weitergeleitet oder diese sind dort bereits vorinstalliert, wobei auch zunächst einer generierbar ist und anschließend Schlüsselkopien davon generiert werden.

Um die Aufgabe der Erfindung zu lösen und somit das Verfahren zur verschlüsselten Übermittlung von Daten derart weiterzuentwickeln, dass eine die Daten besonders stark geschützt werden, ist es erfindungsgemäß vorgesehen, dass vor der Übermittlung der Daten zwischen dem ersten Endgerät als Absender und dem zweiten Endgerät als Empfänger mittels des zweiten Endgeräts, nämlich das Empfänger-Endgerät, ein Verifikationszertifikat erstellt und an das Backend übermittelt und im Backend vom Root-Zertifikat signiert wird. Es wird daraufhin das signierte Verifikationszertifikat an das zweite Endgerät zurückgesendet, der öffentliche zweite digitale Schlüssel des signierten Verifikationszertifikats an das das erste Endgerät beziehungsweise an das Absender-Endgerät übermittelt und dort mit der eigenen Schlüsselkopie des öffentlichen zweiten digitalen Schlüssels überprüft, wobei bei einer fehlgeschlagenen Verifizierung die verschlüsselte Übermittlung der Daten vom ersten Endgerät beziehungsweise vom Absender-Endgerät abgelehnt wird. Bei einer Verifizierung wird hingegen ein mit der Schlüsselkopie des öffentlichen zweiten digitalen Schlüssels des signierten Verifikationszertifikats verschlüsselter einmaliger symmetrischer Sitzungsschlüssel generiert, mittels welchem die zu übermittelnden Daten verschlüsselt werden. Daraufhin werden der verschlüsselte Sitzungsschlüssel und die damit verschlüsselten Daten an das zweite Endgerät, nämlich das Empfänger-Endgerät übermittelt und dort mittels des eigenen privaten ersten digitalen Schlüssels des Verifikationszertifikats entschlüsselt, wobei bei einem Fehlschlag der Verifizierung das erste Endgerät, nämlich das Absender-Endgerät informiert wird oder bei einer Verifizierung die Daten mit dem Sitzungsschlüssel entschlüsselt werden. Somit ist eine besonders geschützte Übermittlung der Daten mittels Sitzungsschlüsseln und den Verifizierungszertifikaten gegen unbefugte Dritte einschließlich Hacker bereitgestellt.

In anderen Worten wird eine Ausgestaltung eines Verfahrens zur hybriden Ende-zu-Ende (E2E) Verschlüsselung, zur Authentifizierung und zu Autorisierung hochsensitiver Kommunikationen zwischen zweier oder mehreren Parteien einschließlich technischer Systeme, insbesondere für Embedded-Systeme bereitgestellt.

Hierbei wird zunächst das Root-Zertifikat mit dem privaten und öffentlichen Schlüssel für ein mit diesem Verfahren vorgesehenes System aus Endgeräten und Netzwerk mit Backend generiert. Der private erste digitale Schlüssel wird in dem gemeinsamen Backend gespeichert und geschützt. Der öffentliche Schlüssel wird initial jeweils in den Endgeräten gespeichert oder ist beispielweise in ECUs ohne Backend-Verbindung vorinstalliert. Wenn ein Endgerät hochsensitive Daten an ein anderes Endgerät senden will (engl.) "push" beziehungsweise von einem anderen Endgerät gefordert wird (engl.) "pull", so fordert "push" beziehungsweise erhält "pull" es vom Empfänger-Endgerät ein einmaliges Verifikationszertifikat mit dem öffentlichen Schlüssel, der über das Backend mit dem Root-Zertifikat signiert wird. Zudem werden die Signatur und Gültigkeitsdauer des Verifikationszertifikats mit dem öffentlichen Schlüssel des Root-Zertifikats vom Absender-Endgerät überprüft. Bei einer Übereinstimmung und somit bei einer Verifizierung werden weitere Schritte des Verfahrens eingeleitet, andernfalls erfolgt eine Ablehnung an das Empfänger-Endgerät. Weiterhin wird ein einmaliger symmetrischer Sitzungsschlüssel generiert und dieser verschlüsselt die hochsensitiven Daten, die zu senden sind, wobei der Sitzungsschlüssel mit dem öffentlichen Schlüssel des Verifikationszertifikats verschlüsselt wird. Anschließend werden die verschlüsselten hochsensitiven Daten und der verschlüsselte Sitzungsschlüssel an das Empfänger-Endgerät übermittelt. Schließlich entschlüsselt das Empfänger-Endgerät den Sitzungsschlüssel mit dem privaten ersten digitalen Schlüssel des Verifikationszertifikats, wobei bei einer Übereinstimmung von Signatur und Gültigkeitsdauer weitere Verfahrensschritte eingeleitet werden und die hochsensitiven Daten mit dem Sitzungsschlüssel entschlüsselt werden. Bei einem Fehlschlag der Übereinstimmung wird das Absender-Endgerät mittels eines Signals informiert.

In einer vorteilhaften Ausgestaltung der Erfindung ist es vorgesehen, dass die Generierung des privaten ersten digitalen Schlüssels und des öffentlichen zweiten digitalen Schlüssels sowie des Root-Zertifikats mittels eines an das Backend übermittelte Befehl aus einem der Endgeräte getriggert wird. Dies bedeutet, dass die Endgeräte derart ausgestaltet sind, über eine Eingabe diesen Befehl zu jederzeit zu übermitteln, sodass die Übermittlung der Daten von einem Nutzer des Endgeräts gestartet werden kann. Alternativ ist es ebenfalls möglich, das Triggern für die Generierung durch Befehle aus weiteren Knotenpunkten des Servers zu ermöglichen, beispielsweise von teilautonomen oder autonomen Endgeräten.

Weiterhin vorteilhaft ist eine Ausgestaltung der Erfindung, in welcher der öffentliche zweite digitale Schlüssel in einem weiteren vom Netzwerk externen Speicher geschützt wird. Beispielsweise kann hierbei der damit generierte und an die jeweiligen Endgeräte übertragene öffentliche zweite digitale Schlüssel an einen mit dem Endgerät gekoppelten Speicher übertragen werden, wodurch bei einem Defekt des Endgeräts der Schlüssel nicht verloren geht. Insbesondere ermöglicht die Speicherung von Schlüsseln in vom Netzwerk externen Speichern die Sicherung der Schlüssel und es wird die Generierung eines neuen Schlüssels vermieden, wodurch beispielweise eine Anwendung von Arbeitsspeicher in dem Verfahren wenigstens teilweise reduziert wird.

In einer weiteren vorteilhaften Ausgestaltung der Erfindung ist es vorgesehen, dass der private erste digitale Schlüssel in einem vom Netzwerk externen Speicher geschützt gespeichert wird. Hierbei wird durch die externe Speicherung ermöglicht, dass die Daten, welche im Backend gespeichert sind, auch in einem weiteren Speicher geschützt bleiben. Dies ist insbesondere bei Anwendung von dritten Netzwerkanbietern von Vorteil, da der vom Netzwerk externe Speicher beispielweise beim OEM abstellbar ist und somit ein Backup der Schlüssel möglich und nur durch den OEM bereitstellbar ist.

In einer weiteren vorteilhaften Ausgestaltung der Erfindung ist es vorgesehen, dass der öffentliche zweite digitale Schlüssel initial jeweils in den Endgeräten gespeichert ist. Dadurch wird nicht nur die Generierung vermieden, sondern es wird der einzige Schlüssel nur diesem einen Endgerät zugewiesen, wodurch beispielweise eine vereinfachte und trotzdem sichere Verschlüsselung durch bereits durchgeführte kryptografische Prozesse bereitgestellt wird, ohne Arbeitsspeicher für neue Schlüssel bereitstellen zu müssen. Der öffentliche zweite digitale Schlüssel wird initial jeweils in den Endgeräten gespeichert oder ist beispielweise in ECUs ohne Backend-Verbindung vorinstalliert. Das Root-Zertifikat kann für einen längeren Zeitraum beispielweise über zwanzig Jahre initiiert und bei Bedarf erneuert werden.

Ebenso vorteilhaft ist eine Ausgestaltung der Erfindung, in welcher hintereinander fehlgeschlagene Verifizierungen mit einem Zähler gezählt werden. Hierbei soll ein Zähler immer dann ausgelöst werden, wenn der die Verifizierung aus verschiedenen Gründen fehlschlägt. Es ist hierbei möglich, die Gründe in Klassen einzuordnen und Daten über die Fehlschläge für statistische Auswertungen und Verbesserungen abzuspeichern. Ebenso ist es möglich, verschiedene Zähler in das Verfahren einzubauen, um verschiedene Daten und Informationen zu sammeln.

Vorteilhaft ist ebenso eine weitere Ausgestaltung der Erfindung, bei welcher bei einem Zähler mit einer Zählung über einem vorgegebenen Wert wenigstens ein Warnsignal ausgelöst wird. Insbesondere sollen hierbei Versuche zur Anmeldung durch Dritte als auch Hackangriffe sofort erkannt und an das Netzwerk weitergeleitet werden. Dadurch kann ein möglicher unerlaubter Eingriff sofort geblockt werden, sodass keine Übermittlung stattfindet.

In weiteren vorteilhaften Ausgestaltungen der Erfindung ist es vorgesehen, dass eine Gültigkeitsdauer des Verifikationszertifikats beziehungsweise des signierten Verifikationszertifikats vorgegeben und die verschlüsselte Übermittelung zeitlich begrenzt wird. Wenn eine Backend-Verbindung mit dem Backend erfolgreich ist und die Kommunikation über ein öffentliches Netzwerk läuft, wird die Gültigkeitsdauer des Verifikationszertifikats insbesondere deutlich reduziert, je nach Anwendung bis zu einem Tag oder sogar bis zu zwei Stunden, um ein unbefugtes Abfangen von Daten durch beispielweise Hacker zu vermeiden. Auch die zeitliche Begrenzung des Verfahrens ermöglicht einen Zeitraum zur Übermittlung der Daten, welcher dann nach Ablauf einer vorgegebenen Zeit unterbrochen wird. Dies führ dazu, dass unerlaubte Eingriffe in die Übermittlung vermieden werden.

Vorteilhaft ist insbesondere:
- Über das Root-Zertifikat und Verifikationszertifikat wird sichergestellt (authentisiert und autorisiert), dass das Absender-Endgerät hochsensitive Daten nur dann übermittelt, wenn die Signatur und Gültigkeitsdauer des Verifikationszertifikats mit dem Root-Zertifikat erfolgreich verifiziert werden, d.h. von einem berechtigten Endgerät stammen.
- Über das für die aktuelle Kommunikationssession generierte Verifikationszertifikat wird sichergestellt (authentifiziert), dass die hochsensitiven Daten mit einem vom Verifikationszertifikat geschützten Sitzungsschlüssel (engl. "session key") verschlüsselt und entschlüsselt werden.
- Der mit dem asymmetrischen Verifikationsschlüssel verschlüsselte bzw. entschlüsselte symmetrische Sitzungsschlüssel kann die hochsensitiven Daten ohne massive CPU-Belastung in Embedded Systemen verschlüsseln beziehungsweise entschlüsseln.
- Auch wenn ein Endgerät beziehungsweise Komponente, beispielweise ECU in Embedded Systemen ohne Backend-Verbindung hochsensitive Daten an ein anderes Endgerät oder Komponente geschützt senden soll, kann das auch ohne Backend-Verbindung geschehen, muss aber das bisherige Verifikationszertifikat verwenden, das noch gültig ist, was in einem geschützten Embedded System mit einer längeren Gültigkeitsdauer möglich ist.
- Wenn die Backend-Verbindung erfolgreich ist und die Kommunikation über ein öffentliches Netzwerk läuft, wird die Gültigkeitsdauer des Verifikationszertifikats deutlich reduziert, je nach Anwendung bis zu einem Tag oder sogar bis zu 2 Stunden, um ein unbefugtes Replay durch Hackers zu vermeiden.
- Weitere Endgeräte oder Komponenten können durch ihre eigenen Verifikationszertifikate mit dem gemeinsamen Root-Zertifikat in das dadurch geschützte System einfacher eingefügt werden.

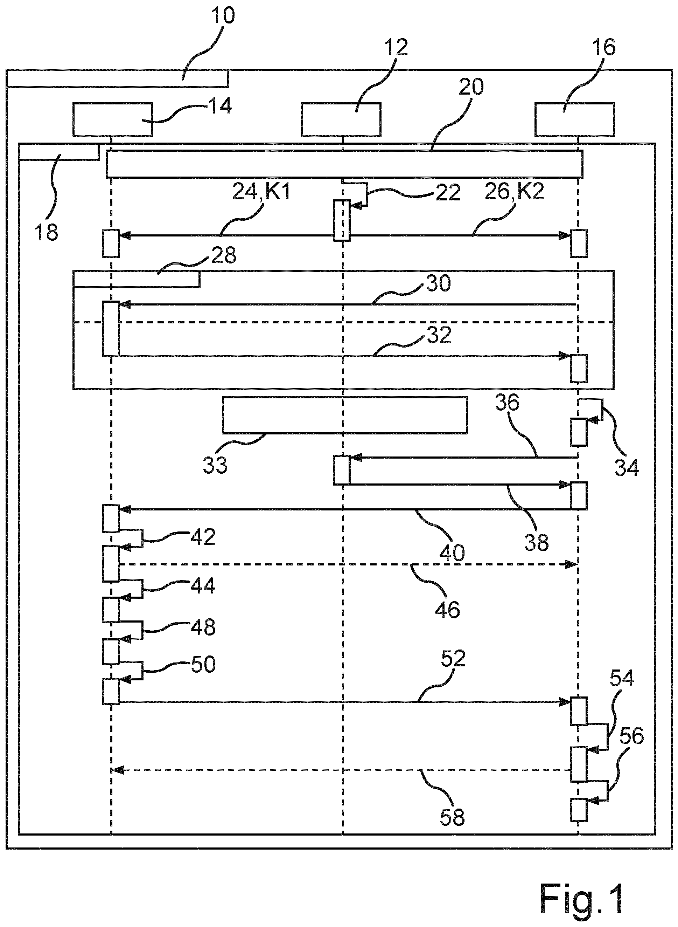

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.
Dabei zeigt die einzige Fig. 1 ein Bilddiagramm zur Veranschaulichung eines möglichen Beispiels des erfindungsgemäßen Verfahrens zur verschlüsselten Übermittlung 10 von Daten, insbesondere mittels einer hybriden E2E-Verschlüsselung und Authentifizierung.

In diesem Beispiel werden ein Netzwerk mit einem Backend 12, einem ersten Endgerät 14 und einem zweiten Endgerät 16 dargestellt. Das Backend 12 ist für registrierte Endgeräte, nämlich ein erstes und zweites Endgerät 14, 16 zugänglich. Das erste Endgerät 14 ist im Beispiel als Absender und das zweite Endgerät 16 als Empfänger dargestellt.

Die Fig. 1 zeigt eine Schleife mit einer Abfrage für das Verfahren, welches mit einer Initialisierung 20 beginnt, um ein nicht dargestelltes Root-Zertifikat Z sowie einen nicht dargestellten privaten ersten digitalen Schlüssel S1 und einen nicht dargestellten öffentlichen zweiten digitalen Schlüssels S2 zu erzeugen beziehungsweise zu generieren. Der öffentliche zweite digitale Schlüssel S2 wird derart kopiert, dass eine erste Schlüsselkopie K1 und eine zweite Schlüsselkopie K2 erzeugt beziehungsweise generiert werden, um diese an alle Endgeräte 14, 16 weiterzugeben und um das autorisierte Übermitteln hochsensibler Daten zu verschlüsseln und abzusichern. Daher wird in einer Initialisierung 22 das gemeinsame Root-Zertifikat Z erzeugt und der geschützte private erste digitale Schlüssel S1 generiert. Daraufhin folgt ein Senden 24 der Schlüsselkopie K1 an das erste Endgerät 14 und ein Senden 26 der Schlüsselkopie K2 an das zweite Endgerät 16.

Es folgt eine Sequenz 28 mit einer alternativen Anfrage zwischen dem ersten Endgerät 14 und dem zweiten Endgerät 16, in der eine Anfrage 30 zum Senden hochsensibler Daten (Pull) durch das zweite Endgerät 16 ausgelöst wird. Es folgt eine Anforderung 32 des öffentlichen zweiten digitalen Schlüssels S2 beziehungsweise der Schlüsselkopie K1 für ein Verifikationszertifikat Z* zum Senden hochsensibler Daten (Push) durch das erste Endgerät 14. Die Wiederverwendung 33 eines gültigen Verifikationszertifikats Z* bei nicht verfügbarer Backend-Verbindung wird benötigt, zum Beispiel bei eingebetteten Komponenten ohne Backend-Verbindung, um in diesem Fall initialisiert zu werden.

Danach wird eine Generierung 34 des Verifikationszertifikats Z* auf dem zweiten Endgerät 16 durchgeführt und anschließend eine Anfrage 36 an das Backend 12 gestartet, um das Verifikationszertifikat Z* mit dem Stammzertifikat, nämlich dem Root-Zertifikat Z zu signieren. Danach erfolgt eine Rücksendung 38 des signierten Verifikationszertifikats Z** vom Backend 12 an das zweite Endgerät 16. Es findet eine Übermittlung 40 statt. Das zweite Endgerät 16 übermittelt hierbei den signierten öffentlichen zweiten digitalen Schlüssel S2 beziehungsweise die Schlüsselkopie K1 des signierten Verifikationszertifikats Z** für hochsensible Daten an das erste Endgerät 14 zurück.

Es folgen Schritte des ersten Endgeräts 14:
- In einem ersten Schritt 42 wird die Signatur und die Gültigkeit des signierten Verifikationszertifikats Z** mit dem öffentlichen zweiten digitalen Schlüssel S2 beziehungsweise mit der Schlüsselkopie K1 des Root-Zertifikats Z überprüft. Wenn die Verifizierung nicht in Ordnung ist, findet ein Stopp 46 statt, in welchem der Prozess gestoppt und der Empfänger, das zweite Endgerät 16 informiert wird.
- In einem zweiten Schritt 44 wird ein zufälliger Sitzungsschlüssel, nämlich ein einmaliger symmetrischer Sitzungsschlüssel S* generiert.
- In einem dritten Schritt 48 werden sämtliche hochsensible Daten mit dem Sitzungsschlüssel S* verschlüsselt.
- In einem vierten Schritt 50 wird der Sitzungsschlüssel S* mit dem öffentlichen zweiten digitalen Schlüssel S2 beziehungsweise der Schlüsselkopie K1 des signierten Verifikationszertifikats Z** verschlüsselt.

Schließlich findet in einem fünften Schritt eine Übermittlung 52 der verschlüsselten Daten und Sitzungsschlüssel S* durch das erste Endgerät 14 an das zweite Endgerät 16 und eine entsprechende Entschlüsselung 54 statt. Das zweite Endgerät 16 entschlüsselt hierbei den Sitzungsschlüssel S* mit dem privaten ersten digitalen Schlüssel S1 des Verifikationszertifikats Z*. Wenn dies nicht funktioniert, findet ein Stopp 58 statt, in welchem der Prozess gestoppt und das sendende erste Endgerät 14 informiert wird. Andernfalls findet eine Entschlüsselung 56 statt, in welcher das zweite Endgerät 16 die hochsensiblen Daten mit dem Sitzungsschlüssel S* entschlüsselt. Dadurch ist das Verfahren zur verschlüsselten Übermittlung von Daten abgeschlossen.

In anderen Worten wird in der Fig. 1 ein Verfahren zur verschlüsselten Übermittlung 10 von Daten zwischen der Endgeräte 14, 16 über ein Netzwerk bereitgestellt, mit den Verfahrensschritten:
- Generierung des privaten ersten digitalen Schlüssels S1 und des öffentlichen zweiten digitalen Schlüssels S2 sowie des Root-Zertifikats Z;
- geschützte Speicherung des privaten ersten digitalen Schlüssels S1 in dem Backend 12 des Netzwerkes; und
- Generierung und Speicherung der jeweiligen Schlüsselkopie K1, K2 des öffentlichen zweiten digitalen Schlüssels S2 in den jeweiligen Endgeräten 14, 16;

Es ist hierbei vorgesehen, dass vor der Übermittlung der Daten mittels des zweiten Endgeräts 16 (Empfänger-Endgerät) ein Verifikationszertifikat Z* erstellt und an das Backend 12 übermittelt und im Backend 12 vom Root-Zertifikat Z signiert wird. Darauf folgend wird das signierte Verifikationszertifikat Z** an das erste Endgerät 14 übermittelt und mit der eigenen Schlüsselkopie K1 des öffentlichen zweiten digitalen Schlüssels S2 vom ersten Endgerät 14 (Absender-Endgerät) überprüft, wobei bei einer fehlgeschlagenen Verifizierung die verschlüsselte Übermittlung der Daten abgelehnt wird oder bei einer Verifizierung ein mit der Schlüsselkopie K1 des öffentlichen zweiten digitalen Schlüssels des signierten Verifikationszertifikats Z** verschlüsselter einmaliger symmetrischer Sitzungsschlüssel S* generiert wird. Zudem wird der Sitzungsschlüssel S* an das zweite Endgerät 16 übermittelt und mittels des eigenen privaten ersten digitalen Schlüssels S1 des signierten Verifikationszertifikats Z**entschlüsselt, wobei bei einem Fehlschlag der Verifizierung das erste Endgerät 14 informiert wird oder bei einer Verifizierung die Daten mit dem Sitzungsschlüssel S* entschlüsselt.

Es ist noch möglich, dass die Generierung des privaten ersten digitalen Schlüssels S1 und des öffentlichen zweiten digitalen Schlüssels S2 sowie des Root-Zertifikats Z mittels eines an das Backend 12 übermittelte Befehl aus einem der Endgeräte 14, 16 gestartet wird. Ebenso, dass der öffentliche zweite digitale Schlüssel S2 in einem vom Netzwerk externen Speicher verschlüsselt gespeichert wird. Weiterhin kann der private erste digitale Schlüssel S1 in einem vom Netzwerk externen Speicher verschlüsselt gespeichert werden. Auch wird der öffentliche zweite digitale Schlüssel K1 beziehungsweise K2 initial jeweils in den Endgeräten 14, 16 gespeichert.

Bei hintereinander fehlgeschlagene Verifizierungen können diese mit einem Zähler gezählt und bei einem Zähler mit einer Zählung über einem vorgegebenen Wert wenigstens ein Warnsignal ausgelöst werden.

Ebenso ist es möglich, dass eine Gültigkeitsdauer des Verifikationszertifikats Z* beziehungswese des signierten Verifikationszertifikats Z** vorgegeben wird, als auch dass die verschlüsselte Übermittelung zeitlich begrenzt wird.

### Bezugszeichenliste

- 10: Verschlüsselte Übermittlung
- 12: Backend
- 14: erstes Endgerät
- 16: zweites Endgerät
- 20: Initialisierung
- 22: Initialisierung
- 24: Senden
- 26: Senden
- 28: Sequenz
- 30: Anfrage
- 32: Anforderung
- 33: Wiederverwendung
- 34: Generierung
- 36: Anfrage
- 38: Rücksendung
- 40: Übermittlung
- 42: erste Schritt
- 44: zweite Schritt
- 46: Stopp
- 48: dritter Schritt
- 50: vierte Schritt
- 52: Übermittlung
- 54: Entschlüsselung
- 56: Entschlüsselung
- 58: Stopp
- K1: Erste Schlüsselkopie
- K2: Zweite Schlüsselkopie
- S1: erste Schlüssel
- S2: zweite Schlüssel
- S*: Sitzungsschlüssel

## Patentansprüche

1. Verfahren zur verschlüsselten Übermittlung (10) von Daten zwischen einem die Daten übermittelnden ersten Endgerät (14) und wenigstens einem die Daten empfangenden zweiten Endgerät (16) über ein Netzwerk, mit den Verfahrensschritten:
- Generierung eines privaten ersten digitalen Schlüssels (S1) und eines öffentlichen zweiten digitalen Schlüssels (S2) sowie eines selbst signierten Root-Zertifikats (Z);
- geschützte Speicherung des privaten ersten digitalen Schlüssels (S1) in einem Backend (12) des Netzwerkes; und
- Generierung und Speicherung einer jeweiligen Schlüsselkopie (K1, K2) des öffentlichen zweiten digitalen Schlüssels (S2) für die jeweiligen Endgeräte (14, 16) und Übermittlung der jeweiligen Schlüsselkopie (K1, K2) an die jeweiligen Endgeräte (14, 16);
**dadurch gekennzeichnet, dass**
- vor der Übermittlung der Daten - mittels des zweiten Endgeräts (16) - ein Verifikationszertifikat (Z*) erstellt und an das Backend (12) übermittelt und im Backend (12) vom Root-Zertifikat (Z) signiert wird, wobei für das Verifikationszertifikat (Z) eine Gültigkeitsdauer vorgegeben wird;
- das signierte Verifikationszertifikat (Z**) an das zweite Endgerät (16) zurückgesendet, das signierte Verifikationszertifikat (Z**) an das erste Endgerät (14) übermittelt und mit der eigenen Schlüsselkopie (K1) des öffentlichen zweiten digitalen Schlüssels (S2) überprüft wird, wobei bei einer fehlgeschlagenen Verifizierung die verschlüsselte Übermittlung der Daten vom ersten Endgerät (14) abgelehnt wird oder bei einer Verifizierung ein mit dem öffentlichen zweiten digitalen Schlüssel (S2**) des signierten Verifikationszertifikats (Z**) verschlüsselter einmaliger symmetrischer Sitzungsschlüssel (S*) generiert wird, mittels welchem die zu übermittelnden Daten verschlüsselt werden;
- der verschlüsselte Sitzungsschlüssel (S*) und die damit verschlüsselten Daten an das zweite Endgerät (16) übermittelt und mittels des eigenen privaten ersten digitalen Schlüssels (S1**) des signierten Verifikationszertifikats (Z**) entschlüsselt werden, wobei bei einem Fehlschlag der Entschlüsselung des Sitzungsschlüssels (S*) das erste Endgerät (14) informiert wird oder bei einer Verifizierung die Daten mit dem Sitzungsschlüssel (S*) entschlüsselt werden; und
- bei fehlender Backend-Verbindung ein noch gültiges Verifikationszertifikat (Z) wiederverwendet wird.

2. Verfahren nach Anspruch 1,
**dadurch gekennzeichnet, dass**
die Generierung des privaten ersten digitalen Schlüssels (S1) und des öffentlichen zweiten digitalen Schlüssels (S2) sowie des Root-Zertifikats (Z) mittels eines an das Backend (12) übermittelte Befehl aus einem der Endgeräte (14, 16) getriggert wird.

3. Verfahren nach Anspruch 1 oder 2,
**dadurch gekennzeichnet, dass**
der öffentliche zweite digitale Schlüssel (S2) in einem vom Netzwerk externen Speicher verschlüsselt gespeichert wird, wodurch bei einem Defekt des Endgeräts der Schlüssel nicht verloren geht.

4. Verfahren nach einem der vorgehenden Ansprüche,
**dadurch gekennzeichnet, dass**
der private erste digitale Schlüssel (S1) in einem vom Netzwerk externen Speicher verschlüsselt gespeichert wird, wodurch bei einem Defekt des Netzwerks der Schlüssel nicht verloren geht.

5. Verfahren nach einem der vorgehenden Ansprüche,
**dadurch gekennzeichnet, dass**
der öffentliche zweite digitale Schlüssel (S2) bei der Initialisierung von Endgeräten mit Backend-Verbindung durch Triggern aus den Endgeräten (14, 16) übermittelt oder dort im Fall ohne Backend-Verbindung vorinstalliert wird.

6. Verfahren nach einem der vorgehenden Ansprüche,
**dadurch gekennzeichnet, dass**
hintereinander fehlgeschlagene Verifizierungen mit einem Zähler gezählt werden.

7. Verfahren nach Anspruch 6,
**dadurch gekennzeichnet, dass**
bei einem Zähler mit einer Zählung über einem vorgegebenen Wert wenigstens ein Warnsignal ausgelöst wird.

8. Verfahren nach einem der vorgehenden Ansprüche,
**dadurch gekennzeichnet, dass**
eine Gültigkeitsdauer des einmaligen Verifikationszertifikats (Z*) zur Vermeidung eines unbefugtes Abfangen von Daten durch Hacker einschließlich eines Replays vorgegeben wird.

9. Verfahren nach einem der vorgehenden Ansprüche,
**dadurch gekennzeichnet, dass**
eine Gültigkeitsdauer des signierten Verifikationszertifikats (Z**) zur Vermeidung eines unbefugtes Abfangen von Daten durch Hacker einschließlich eines Replays vorgegeben wird.

10. Verfahren nach einem der vorgehenden Ansprüche,
**dadurch gekennzeichnet, dass**
die verschlüsselte Übermittelung zur Vermeidung eines unbefugtes Abfangen von Daten durch Hacker einschließlich eines Replays zeitlich begrenzt wird.

## Claims

1. Method for an encrypted transmission (10) of data via a network between a first terminal device (14) transmitting the data and at least one second terminal device (16) receiving the data, comprising the method steps of:
- generating a private first digital key (S1) and a public second digital key (S2) and a self-signed root certificate (Z);
- storing in a protected manner the private first digital key (S1) in a backend (12) of the network; and
- generating and storing a relevant key copy (K1, K2) of the public second digital key (S2) for the respective terminal devices (14, 16) and transmitting the relevant key copy (K1, K2) to the respective terminal devices (14, 16);
**characterized in that**
- before the data are transmitted - by means of the second terminal device (16) - a verification certificate (Z*) is produced and transmitted to the backend (12) and signed in the backend (12) by the root certificate (Z), wherein a validity period is specified for the verification certificate (Z);
- the signed verification certificate (Z**) is sent back to the second terminal device (16), the signed verification certificate (Z**) is transmitted to the first terminal device (14) and checked using the own key copy (K1) of the public second digital key (S2), wherein, in the case of a failed verification, the encrypted transmission of the data from the first terminal device (14) is rejected or, in the case of a verification, a one-time symmetric session key (S*) encrypted using the public second digital key (S2**) of the signed verification certificate (Z**) is generated, by means of which session key the data to be transmitted are encrypted;
- the encrypted session key (S*) and the data encrypted therewith are transmitted to the second terminal device (16) and decrypted by means of the own private first digital key (S1**) of the signed verification certificate (Z**), wherein, in the case of a failure of the decryption of the session key (S*), the first terminal device (14) is informed, or, in the case of a verification, the data are decrypted using the session key (S*); and
- in the case of a missing backend connection, a verification certificate (Z) which is still valid is reused.

2. Method according to claim 1,
**characterized in that**
the generation of the private first digital key (S1) and of the public second digital key (S2) and of the root certificate (Z) is triggered by means of a command transmitted to the backend (12) from one of the terminal devices (14, 16).

3. Method according to claim 1 or 2,
**characterized in that**
the public second digital key (S2) is stored in an encrypted manner in a memory external to the network, as a result of which the key is not lost in the case of a fault in the terminal device.

4. Method according to any of the preceding claims,
**characterized in that**
the private first digital key (S1) is stored in an encrypted manner in a memory external to the network, as a result of which the key is not lost in the case of a fault in the network.

5. Method according to any of the preceding claims,
**characterized in that**
the public second digital key (S2) is transmitted during the initialization of terminal devices having a backend connection by triggers from the terminal devices (14, 16) or is pre-installed there if there is no backend connection.

6. Method according to any of the preceding claims,
**characterized in that**
successive failed verifications are counted using a counter.

7. Method according to claim 6,
**characterized in that**
if a counter counts above a specified value, at least one warning signal is triggered.

8. Method according to any of the preceding claims,
**characterized in that**
a validity period of the one-time verification certificate (Z*) is specified to prevent an unauthorized interception of data by hackers, including a replay.

9. Method according to any of the preceding claims,
**characterized in that**
a validity period of the signed verification certificate (Z**) is specified to prevent an unauthorized interception of data by hackers, including a replay.

10. Method according to any of the preceding claims,
**characterized in that**
the encrypted transmission is time-limited to prevent an unauthorized interception of data by hackers, including replays.

## Revendications

1. Procédé de transmission chiffrée (10) de données entre un premier terminal (14) transmettant les données et au moins un second terminal (16) recevant les données par l'intermédiaire d'un réseau, comportant les étapes de procédé de :
- génération d'une première clé numérique privée (S1) et d'une seconde clé numérique publique (S2), ainsi que d'un certificat racine auto-signé (Z) ;
- stockage sécurisé de la première clé numérique privée (S1) dans un serveur dorsal (12) du réseau ; et
- génération et stockage d'une copie de clé (K1, K2) respective de la seconde clé numérique publique (S2) pour les terminaux (14, 16) respectifs et transmission de la copie de clé (K1, K2) respective aux terminaux (14, 16) respectifs ;
**caractérisé en ce que**
- avant la transmission des données - par le biais du second terminal (16) - un certificat de vérification (Z*) est créé et transmis au serveur dorsal (12), puis signé par le certificat racine (Z) au niveau du serveur dorsal (12), dans lequel une durée de validité est prédéfinie pour le certificat de vérification (Z) ;
- le certificat de vérification signé (Z**) est renvoyé au second terminal (16), le certificat de vérification signé (Z**) est transmis au premier terminal (14) et est vérifié à l'aide de la propre copie de clé (K1) de la seconde clé numérique publique (S2), dans lequel la transmission chiffrée des données est refusée par le premier terminal (14) en cas d'échec de la vérification, ou, en cas de vérification réussie, une clé de session symétrique à usage unique (S*) chiffrée avec la seconde clé numérique publique (S2**) du certificat de vérification signé (Z**) est générée, clé de session par le biais de laquelle les données à transmettre sont chiffrées ;
- la clé de session chiffrée (S*) et les données ainsi chiffrées sont transmises au second terminal (16) et déchiffrées par le biais de la propre première clé numérique privée (S1**) du certificat de vérification signé (Z**), dans lequel le premier terminal (14) est informé en cas d'échec du déchiffrement de la clé de session (S*) ou, en cas de vérification réussie, les données sont déchiffrées par le biais de la clé de session (S*) ; et
- en cas d'échec de connexion au serveur dorsal, un certificat de vérification (Z) encore valide est réutilisé.

2. Procédé selon la revendication 1,
**caractérisé en ce que**
la génération de la première clé numérique privée (S1) et de la seconde clé numérique publique (S2), ainsi que du certificat racine (Z), est déclenchée par le biais d'un ordre transmis au serveur dorsal (12) depuis l'un des terminaux (14, 16).

3. Procédé selon la revendication 1 ou 2,
**caractérisé en ce que**
la seconde clé numérique publique (S2) est stockée sous forme chiffrée dans un stockage externe au réseau, ce qui permet d'éviter la perte de la clé en cas de défaillance du terminal.

4. Procédé selon l'une des revendications précédentes,
**caractérisé en ce que**
la première clé numérique privée (S1) est stockée sous forme chiffrée dans un stockage externe au réseau, ce qui permet d'éviter la perte de la clé en cas de défaillance du réseau.

5. Procédé selon l'une des revendications précédentes,
**caractérisé en ce que**
la seconde clé numérique publique (S2) est transmise lors de l'initialisation des terminaux disposant d'une connexion au serveur dorsal, par le biais de déclencheurs provenant des terminaux (14, 16), ou y est préinstallée dans le cas où il n'y a pas de connexion au serveur dorsal.

6. Procédé selon l'une des revendications précédentes,
**caractérisé en ce que**
des échecs successifs de vérification sont comptabilisés à l'aide d'un compteur.

7. Procédé selon la revendication 6,
**caractérisé en ce que**
lorsqu'un compteur affiche un comptage supérieur à une valeur prédéfinie, au moins un signal d'alerte est provoqué.

8. Procédé selon l'une des revendications précédentes,
**caractérisé en ce que**
une durée de validité du certificat de vérification à usage unique (Z*) est prédéfinie afin d'empêcher toute interception non autorisée de données par des pirates informatiques, y compris toute attaque par rejeu.

9. Procédé selon l'une des revendications précédentes,
**caractérisé en ce que**
une durée de validité du certificat de vérification signé (Z**) est prédéfinie afin d'empêcher toute interception non autorisée de données par des pirates informatiques, y compris toute attaque par rejeu.

10. Procédé selon l'une des revendications précédentes,
**caractérisé en ce que**
la transmission chiffrée est limitée dans le temps afin d'empêcher toute interception non autorisée de données par des pirates informatiques, y compris toute attaque par rejeu.
